Europäisches Patentamt

**European Patent Office**

Office européen des brevets

(11) Publication number: **0 142 300**
**A2**

# EUROPEAN PATENT APPLICATION

(21) Application number: 84307296.8

(22) Date of filing: 24.10.84

(51) Int. Cl.⁴: **B 60 C 29/00**

(30) Priority: 16.11.83 NZ 206289

(43) Date of publication of application:
22.05.85 Bulletin 85/21

(84) Designated Contracting States:
BE DE FR GB IT NL SE

(71) Applicant: Stadler, Eduard
9 Richmond Road
Eastbourne(NZ)

(72) Inventor: Stadler, Eduard
9 Richmond Road
Eastbourne(NZ)

(74) Representative: Valentine, Francis Anthony
Brinsley et al,
REDDIE & GROSE 16 Theobalds Road
London WC1X 8PL(GB)

(54) Tyre pressure equalising device.

(57) A pressure equalising device equalises and controls the pressures in at least two pressurised pneumatic tyres of a multiple wheel assembly of a road vehicle. The device comprises a valve body (3) defining an equalising chamber (9) and having a socket part (4) mountable directly on the conventional air inlet connection of one tyre and having a tubular connection (13) for engagement with the air inlet connection of the second of the two tyres. The two tyre inlet connections (4 and 13) communicate with the equalising chamber (9) on opposite sides of a valve seat (10a) for a valve member (14) urged towards the seat (10a) by a spring (19). The two tyre pressures are equalised when the valve is open to maintain equalised pressure between the tyres under varying load conditions. The valve however closes the chamber sealing off the communication between the tyre inlet connections, in the event of failure of one tyre, to prevent pressure loss from the other tyre.

FIG. 2

FIG. 3

EP 0 142 300 A2

Croydon Printing Company Ltd.

TYRE PRESSURE EQUALISING DEVICE

0142300

This invention relates to pressure equalising devices for controlling the pressure between at least two pressurized chambers, and may be particularly usefully applicable to the controlling of equalising pressure between two or more pneumatic tyres for heavy vehicles such as trucks, heavy trailers, wheeled cranes and loaders and the like which are commonly provided with multiple wheel assemblies and in particular sets of wheels in pairs. It will be appreciated however that the invention is not necessarily confined to use with pneumatic tyres on vehicles, but may have other applications in other fields in controlling and equalising pressure between various kinds of pressurized fluid chambers or containers. The preferred application of the invention is however concerned with pneumatic tyres as aforesaid and the present specification is accordingly so directed to this aspect.

Various equalising pressure devices for pairs of pneumatic tyres have been provided and proposed, but such known constructions may have disadvantages in efficiency and effectiveness in operation, complexity, and inability to handle or cope with pressure failure in one of the chambers or tyres concerned. Accordingly, one object of the present invention is to provide a pressure equalising device overcoming these disadvantages and being of relatively simple construction and capable of being manufactured and sold at relatively low cost.

Other and more particular objects and advantages of the present invention would become apparent from the ensuing description.

According to this invention therefore, there is provided a pressure equalising device for controlling the pressure between at least two pressurized pneumatic tyres of a multiple wheel assembly, comprising a valve body defining an equalising chamber and having a first duct communicating with an outer recessed or socket part of the valve body which is arranged to receive and sealingly engage with the outer inlet end portion of an air inlet connection of one of said pneumatic tyres, the valve body having a second duct coupled or arranged for coupling to an air inlet connection of the other of said two pneumatic tyres, the second of said ducts communicating with said equalising chamber by way of a main bore and associated main port and the first other of said ducts communicating with said equalising chamber by way of a separate bore opening to a secondary port spaced from said main port, said valve body being further provided with a part housing a main valve member comprising a piston part slidably and sealingly housed within a bore opening to and forming part of the equalising chamber so that an inner face of said piston part closes the equalising chamber, there being a valve head part protruding co-axially inwardly from said inner face of the piston part for sealable location within and on a co-axial recessed valve seat at and enlarging said main port and said valve member being normally biased under a prescribed biasing force, on the piston part outer side towards closure of said main port and main bore from communication with the equalising chamber and the second port; the arrangement providing
0142300
for direct mounting of the device on one pneumatic tyre of the assembly without the requirement for a wheel mounting for the device, and further providing that pressure from both presurized pneumatic tyres can act

independantly and/or in combination on said valve member with the valve member closed or partially open as determined by said prescribed biasing force for pressure equalising between the tyres within predetermined limits and so that excess pressure in either pneumatic tyre exerting more than the upper level of said predetermined limits of said prescribed biasing force will effect or maintain opening of the valve member against the biasing force for equalising of the pressure between the pneumatic tyres whilst pressure failure in either pneumatic tyre below the lower level of said predetermined limits will result in full maintained closure of the valve member on its seat under the biasing force to prevent pressure loss from the other pneumatic tyre.

Some preferred aspects of the invention will now be described by way of example and with reference to the accompanying drawings, in which:-

FIGURE 1 is a side elevational view of one form of pressure equalising device in accordance with the invention fitted to a pneumatic tyre assembly.

FIGURE 2 is an end view in the direction of arrows II-II of the main valve body part of the device of figure 1, removed from the tyre assembly.

FIGURE 3 is a longitudinal sectional view of the device as viewed in the direction of arrows III-III in figure 2.

FIGURE 4 is a longitudinal sectional view of the main valve body part of the device as viewed in the direction arrows IV-IV in figure 2.

FIGURE 5 is a perspective view illustrating a second form of pressure equalising device in accordance with the invention and similarly intended for fitment to a dual wheel pneumatic tyre assembly.

FIGURE 6 is a plan view of the main valve body part of the device of figure 5, with the other components removed.

FIGURE 7 is a sectional view in the direction of arrows VII-VII of figure 6 but with the valve member in position, and

FIGURE 8 is a longitudinal section view similar to figure 3 but of the second form of the device and viewed in the direction of arrows VIII-VIII of figure 6.

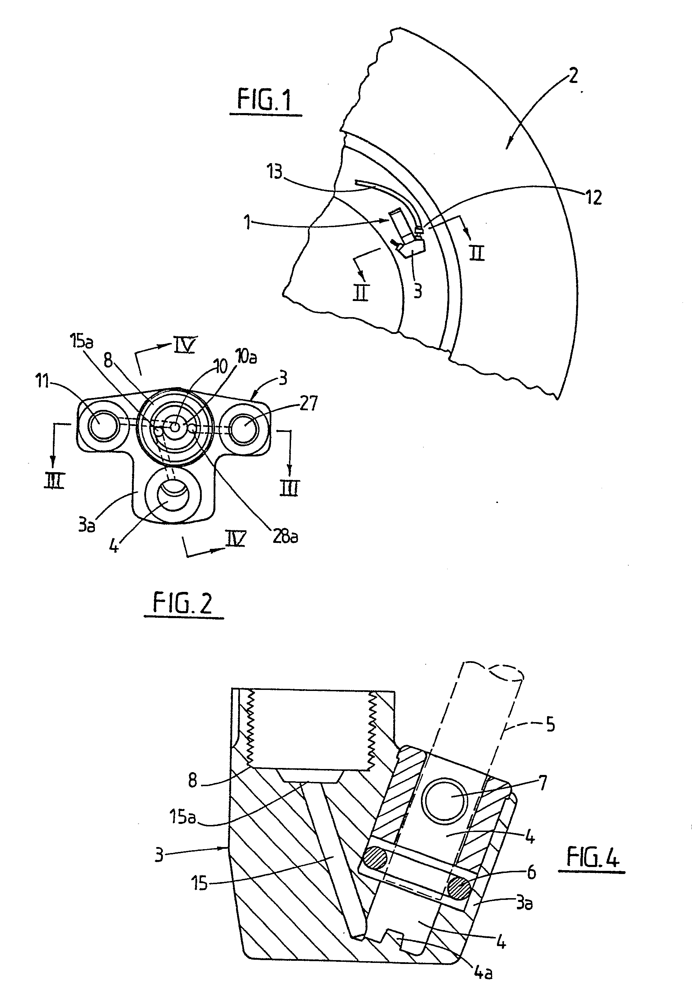

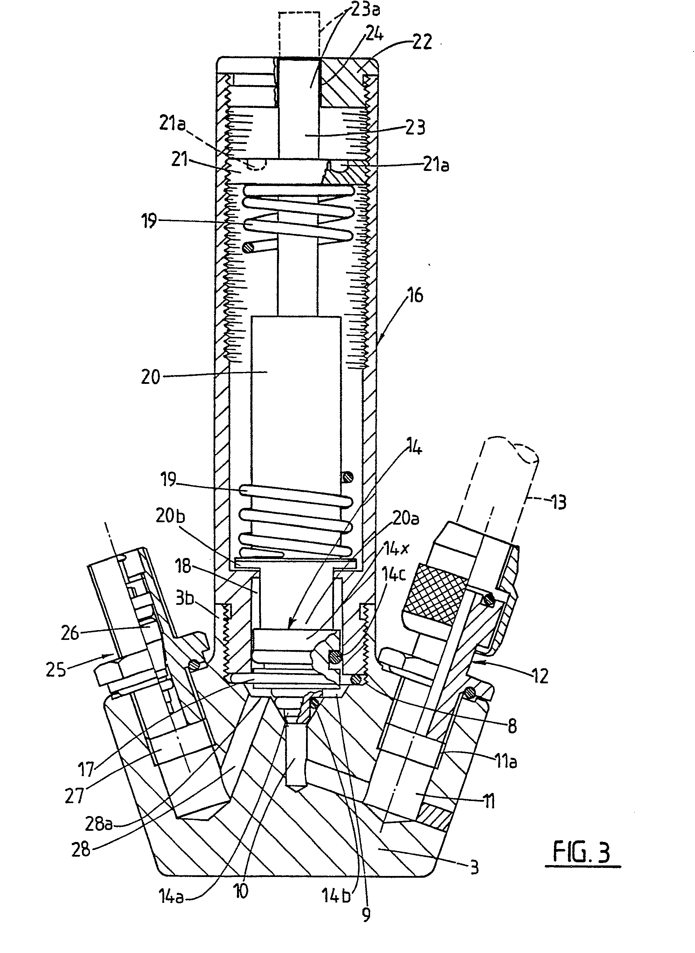

Referring firstly to figures 1 to 4 inclusive, in the first form of the invention the device (generally indicated by the arrow 1) may be mountable on a dual wheel assembly 2 without the need for special mounting brackets or special tools, as is usually the case with some prior constructions of equalising devices, by constructing the valve body 3 so that the first duct 4 is located in a portion 3a of the body 3 offset from the general line of the device 1 and by such first duct 4 being shaped and dimensioned so as to locate as a close fit over the normally provided projecting air inlet valve tubular connection 5 of the outer accessible tyre of a dual wheel assembly. The first duct 4 may have an inner O-ring resilient seal 6 such as a VITON seal to locate as a tight fit over the tube connector
5, and positive securement of the device 1 in position can be achieved simply such as by the provision of an allen screw 7 through the valve body 3 at the first duct wall and which can be tightened onto the tubular connector 5 of the tyre, but alternative securement means can be provided if so required. The normally provided air inlet valve assembly can be removed or an inner co-axial projection 4a can be provided at the base of the duct 4 and arranged to engage and depress the usually provided valve release pin of the valve assembly to hold the valve assembly open for the passage of air into and out of the tyre.

The valve body 3 is provided with a medial recess 8 defining in part the equalising chamber 9, and having a main co-axial bore 10 communicating with the second duct 11, which may be screw threaded at 11a and provided with a complimentary screw threaded hose connection 12 which is coupled or arranged for coupling to a hose or pipe connection 13 with the second pressurized chamber or pneumatic tyre tubular connection (not shown), again from which the normally provided one way air inlet valve can be removed or alternatively the hose or pipe connection 13 may have an end fitting with an inner projection arranged to depress the air release pin of the valve assembly if left in the connection of the second tyre. Retention of the air inlet valves in the respective tyres may be desirable as it does provide an added safety measure against deflation should the equalised device of the invention, or the hose connection 13, became detached from the respective tyre accidentally or

0142300

deliberately (such as for servicing or for repair etc. of a punctured tyre).

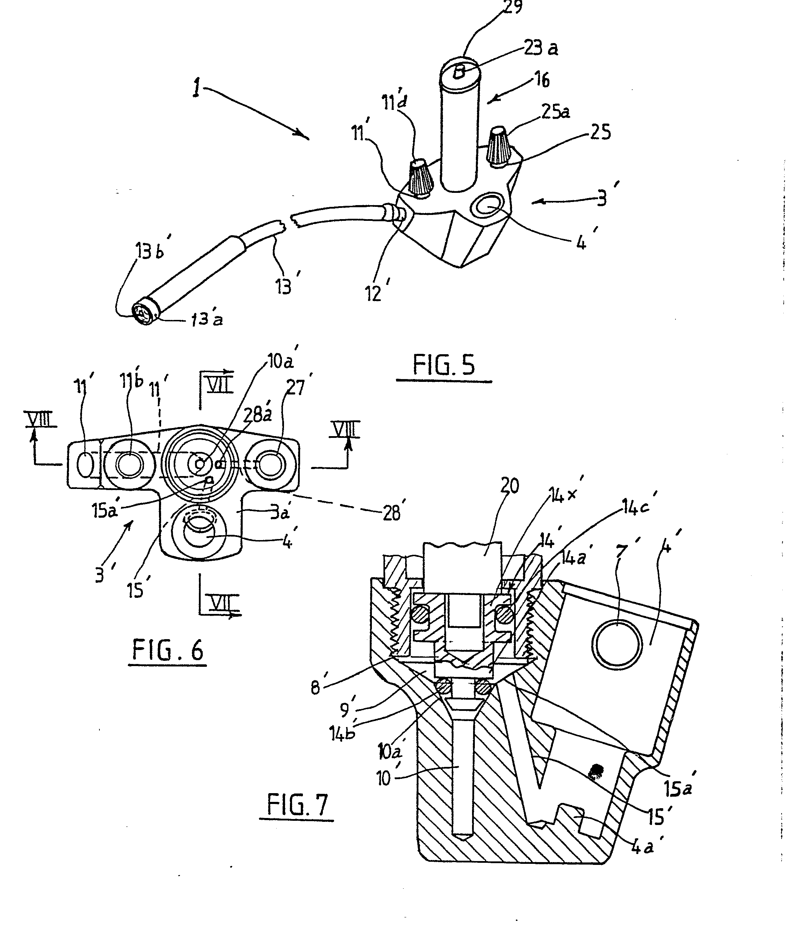

In a modification, the connection 12 can be dispensed with or varied in favour of any other suitable connection e.g. a simple plain bush and screw fitting such as the arrangement of figure 4 for connector 5.

The main bore 10 communicates with a main port 10a provided with or defining a valve seat 10a on which an inner end portion or head 14a of a valve member 14 can locate for closing off the main bore 10, and communication to the first duct 4 is provided by way of a secondary passage 15 and secondary port 15a opening to the equalising chamber 9 but spaced from the main bore 10 and main port 10a so that when the valve member 14 is closed on the valve seat 10a communication between the first and second ducts 4 and 11, and thus first and second pressurized chambers or pneumatic tyres, is prevented.

The valve member 14 preferably comprises a cylindrical piston member 14x which is reciprocally mounted within a tubular extension 16 projecting from the valve body 3 and co-axially of the equalising chamber 8, main bore 10 and port 10a; the inner face of the valve member 14 thus closes the equalising chamber 9, and the valve member 14 has an inner projecting co-axial end portion shaped to define a valve head 14a for sealing on the valve seat 10a, and preferably provided with a resilient O-ring seal 14b to seal on said valve seat 10a under a biasing force exerted on the rear or outer end of the valve member 14.

In the preferred form of the invention, the extension tube 16 is arranged for screw threaded engagement with a co-axial socket portion 3b of the valve body 3 to facilitate assembly and servicing of the device 1, and the arrangement may provide for the inner end of the extension tube 16 to compress and seal on a sealing O-ring 17 at the periphery of the equalising chamber 9 to prevent air leakage, and the valve member piston 14x may be similarly provided with an annular recess containing a resilient O-ring seal 14c for sealing engagement with the bore 18 of the tubular extension 16 in which the piston portion of the valve member 14 is reciprocally located. The biasing force is arranged to be exerted by way of a compression spring 19, and preferably the compression spring 19 is located within the tubular extension 16 and about a cylindrical thrust member or rod 20 having an inner end portion 20a arranged to bear on the rear face of the piston part of the valve member 14. The compression spring may be located between a fixed collar or like abutment 20b on the thrust member 20 and an outer screw threaded stop member 21 which is located within the outer part of the tubular extension 20 and in screw threaded engagement with such outer part, to thus provide an arrangement whereby the spring tension can be adjusted within fine limits for setting of the prescribed biasing force to maintain the valve closed in the event of pressure failure in one of said pressure chambers or pneumatic tyres, whilst permitting the valve member 14 to be moved off the valve seat 10a under normal operating conditions for equalising of pressure between the two pressure chambers or pneumatic tyres connected

**0142300**

and communicating by way of the first and second ducts
4 and 11 and passages 10 and 15 leading to the main and
secondary ports 10a and 15a of the equalising chamber 9.
The screw threaded stop member 21 can be provided with
such as one or more recesses 21a arranged to receive such
as a turning key for adjustment.

Preferably, the outer end of the tubular extension
16 is provided with a screw threaded cap 22 to substantially
close such outer end, and the cylindrical thrust member 20
is provided with co-axial outwardly extending indicator
rod 23 the outer end portion 23a of which is slidably
located in and through a co-axial aperture 24 in the sealing
cap 22 to thus provide a visual indication of movement of
the valve member 14 between the fully closed and fully open
positions.    If desired, appropriate markings  or
graduations can be provided on the indicator rod outer end
portion 23a to enable a direct pressure reading to be
obtained.    It is further envisaged that the thrust member
20 and/or indicator rod 23 can be arranged to actuate an
electric signal whereby the tyre pressure and/or tyre pressure
failure can be visually indicated to a driver in the cab
of a truck having pneumatic tyres fitted with the equalising
devices in accordance with this invention, separate readings
being provided for each set of tyres.

With the preferred construction providing for one
duct 4 to fit directly onto the tubular inlet connection 5
of one of the pneumatic tyres, the valve body 3 can be
provided with a separate tubular inlet connection 25 having a conventional pneumatic tyre inlet air valve 26; and the
socket or duct 27 in the valve body 3 for such connection 0142300
25 is provided with a communicating passage 28 leading
to a further inlet port 28a at the equalising chamber 9
spaced from the main and secondary ports 10a and 15a
so that air under pressure can be admitted to the equalising
chamber 9, and when under pressure exerting a force greater
than the biasing forced exerted by the compression spring
19 for closing the valve, the valve member 14 will be opened
for equalising pressure to be admitted to both pressure
chambers connected to the device 1.

As will be seen from the drawings the effective
inner face area of the valve member 14 on which air pressure
can act is substantially greater than the end face area
of the valve head 14a on which air pressure through the
main bore 10 can act; and the arrangement is such that when
the valve member 14 has its valve head 14a and seal 14b
closed on the valve seat 10a on a faulty tyre losing 30%
or more air pressure, the valve will not re-open until air
pressure in the equalising chamber is at least 30% above the
prescribed setting for the device.

The preferred construction with the indicator rod 23
and particular valving arrangement described additionally
provides a means whereby a driver or operator may readily
check the pressures of the respective sets of tyres at any
time, simply by depressing the rod projecting end portion
by finger pressure and then releasing the pressure.   If
the tyres are correctly inflated to within about 3 p.s.i.,
the indicator rod will be moved outwardly under the inner air pressure force on the valve member 14 to its previous projecting position; but if the tyres are under inflated by more than about 3 p.s.i., the indicator rod will not return fully to its previous position.

One disadvantage with the aforegoing first form of the invention is that only one air filling point is provided for the pair of tyres and a driver or operator may not be able to readily ascertain which of the two tyres is in fact under or over inflated.   Accordingly, a second form of the invention overcomes these disadvantages by the provision of two separate air filling connections providing a means for checking the state of the indivudal tyres.

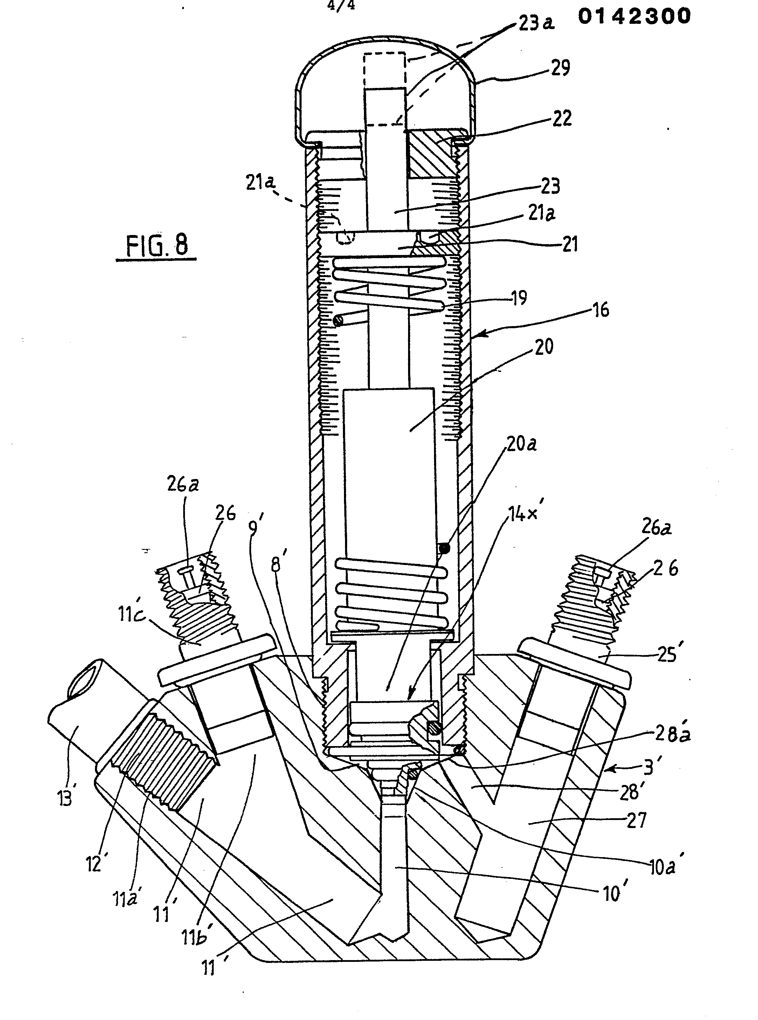

Referring now to figures 5 to 8 of the drawings, the device (in which like parts have like reference numerals) may have a main valve body 3' substantially similar to the first described and illustrated arrangement with a first duct 4' shaped and dimensioned for fitment on an air inlet valve connection 5 of one tyre 2 of a dual wheel assembly, and similarly securable in position by such as an allen screw 7'.

The first duct 4' is placed in communication with the equalising chamber 9' by way of a passage 15' and port 15a', as before.  The valve body recess 8' defining the equalising chamber 9' reciprocally housing the valve 14', has its inner end of a double merging co-axial frusto-conical form leading to the main co-axial bore 10' in direct communication with the second duct 11'.   In this construction the outer upper part of the second duct 11' is screw threaded

at 11a'' and provided with a screw threaded connector 0142300 12' and flexible high pressure hose connection 13' having its outer free end part 13a' arranged for screw threaded connection to the typical tubular air inlet connection of the second tyre of the dual wheel assembly; said outer end part preferably has a one way valve arrangement 13b' normally biased closed but openable on engagement with the second tyre inlet air connection and arranged to simultaneously open the normally provided inlet valve of such tyre inlet air connection so as to place the second tyre interior in communication with the second duct 11' and main bore 10', said bore 10' being closable by the valve member 14' when in its innermost position having its O-ring seal 14b' in sealing engagement on the valve seat 10a' defined by the innermost frusto-conical face of the equalising chamber 9' inner end.

This construction further provides an inlet/outlet duct 11b' communicating directly and permanently with the second duct 11', and provided with a screw threaded connector 11c' containing a conventional one way air inlet/outlet valve for inflation or deflation (if over-inflated) of the second tyre when the valve member 14' is in the closed position.

The valve body 3' has its main separate air inlet connection 25' similarly provided with a conventional one way air inlet valve 26 for inflation of both tyres (or deflation by depression of the air release pin 26a), as before, and such connection 25' has a communicating passage 28' leading to port 28a' opening to the equalising chamber 9'

in spaced relationship from port 15a' in the other

**0142300**

frusto-conical inner end part of the recess 8'.    Both

connections 25' and 11c may be identical and are preferably provided with removable dust caps 25a and 11d.

The second form of the device has a tubular extension 16 and valve biassing means substantially similar to the first described arrangement, but a further refinement includes the provision at the upper end of the extension 16 of a snap-on/snap-off (or screw on/screw off) transparent dust seal cap member 29 through which the position of the indicator rod outer end portion 23a can be clearly seen, the cap member 29 being easily detachable to enable depression of the rod 23 in testing the inflation state of the tyres.    The length of the indicator rod 23 and spring bias setting of the device can be such that the rod outer end portion 23a normally projects a prescribed distance beyond the closure cap 22 when the tyres are at their correct inflation; this will show an operator that the tyres are under inflated if the rod 23 is moved inwardly of this prescribed position, or over inflated if the rod 23 projects outwardly beyond this prescribed position.

Any suitable materials can be used in the construction of the device in accordance with the invention provided the desired strength and robustness characteristics are retained e.g. cast metal alloys or rigid plastics materials can be employed for the valve body and extension part; and preferably the components, including the seals utilised, are formed of materials capable of withstanding relatively high temperatures e.g. up to 230 degrees centigrade.

It will be appreciated also that the valve body is

**0142300**

not necessarily of the particular shape illustrated and described, and may be varied as to the angular disposition of ducts 4,11 and 27, (or 4',11' and 27') and the manner in which the respective connections to the ducts may be made.

Thus, by this invention, there is provided a relatively simple and easily fitted pressure equalising device which is both efficient and effective in operation and has a fail-safe arrangement whereby in the event of pressure failing in one pressure chamber i.e. one of the pair of pneumatic tyres being punctured, the valve member immediately closes on its seat so that pressure is not lost from the other pneumatic tyre of the pair.

Some preferred forms and applications of the invention have been described and illustrated by way of example, but it will be appreciated that other variations of and modifications to the invention can take place without departing from the scope of the appended claims, and that the device in accordance with this invention may have applications for equalising pressure between pressurized fluid chambers other than pneumatic tyres.

CLAIMS

1. A pressure equalising device (1) for controlling the pressure between at least two pressurized pneumatic tyres of a multiple wheel assembly (2), comprising a valve body (3)(3') defining an equalising chamber (9)(9') and having a first duct (4)(4') communicating with an outer recessed or socket part (3a)(3a') of the valve body (3) (3') which is arranged to receive and sealingly engage with the outer inlet end portion of an air inlet connection (5) of one of said pneumatic tyres, the valve body (3)(3') having a second duct (11)(11') coupled or arranged for coupling to an air inlet connection (5) of the other of said two pneumatic tyres, the second of said ducts (4,11) (4',11') communicating with said equalising chamber (9)(9') by way of a main bore (10)(10') and associated main port (10a)(10a') and the first other of said ducts (4,11)(4',11') communicating with said equalising chamber (9)(9') by way of a separate bore (15)(15') opening to a secondary port (15a)(15a') spaced from said main port (10a)(10a'), said valve body (3)(3') being further provided with a part (16) housing a main valve member (14) comprising a piston part (14x)(14x') slidably and sealingly housed within a bore (18) opening to and forming part of the equalising chamber (9) so that an inner face of said piston part (14x)(14x') closes the equalising chamber (9) (9'), there being a valve head part (14a)(14a') protruding co-axially inwardly from said inner face of the piston part (14x)(14x') for sealable location within and on a co-axial recessed valve seat (10a)(10a') at and enlarging said main port (10a)(10a') and said valve

member (14)(14') being normally biased under a   **0142300**
prescribed biasing force (19) on the piston part (14x)
(14x') outer side towards closure of said main port (10a)
(10a') and main bore (10)(10') from communication with the
equalising chamber (9)(9') and the secondary port (15a)
(15a'); the arrangement providing for direct mounting of
the device (1) on one pneumatic tyre of the assembly (2)
without the requirement for a wheel mounting for the
device (1), and further providing that pressure from both
pressurized pneumatic tyres can act independantly and/or
in combination on said valve member (14)(14') with the
valve member (14)(14') closed or partially open as
determined by said prescribed biasing force (19) for pressure
equalising between the tyres within predetermined limits and
so that excess pressure in either pneumatic tyre exerting more
than the upper level of said predetermined limits of said
prescribed biasing force (19) will effect or maintain opening
of the valve member (14)(14') against the biasing force (19)
for equalising of the pressure between the pneumatic tyres,
whilst pressure failure in either pneumatic tyre below the
lower level of said predetermined limits will result in
full maintained closure of the valve member (14)(14') on its
seat (10a)(10a') under the biasing force (19) to prevent
pressure loss from the other pnemuatic tyre.

2.   A pressure equalising device (1) as claimed in claim
1 wherein said recessed valve seat (10a)(10a') is of frusto-
conical form and said valve head part (14a)(14a') is of
complementary form with an O-ring seal (14b)(14b') arranged
to seal on the frusto-conical face of the valve seat (10a)(10a').

0142300

3.    A pressure equalising device (1) as claimed in claim 1 or claim 2, wherein said device (1) has a pressure indicating means (23)(23a) for visually assessing the pressure in the connected pressurized tyres.

4.    A pressure equalising device (1) as claimed in any one of the preceding claims wherein said valve body (3') is provided with a first fluid inlet connection (25) (25') communicating directly with said equalising chamber (9'), said first fluid inlet connection (25)(25') being provided with a valve means (26) normally preventing escape of fluid under pressure from the pressurized tyres via said equalising chamber (9').

5.    A pressure equalising device (1) as claimed in claim 4 wherein said valve body (3') is provided with a second fluid inlet (11c') communicating with said second duct (11') and main bore (10'), said second fluid inlet (11c') being provided with a valve means (26) normally preventing escape of pressurized fluid from said second duct 11' and connected pressurized tyre.

6.    A pressure equalising device (1) as claimed in claim 3, or as claimed in claim 4 or claim 5 insofar as these claims are dependant upon claim 3, wherein said pressure indicating means comprises an elongate member (20,23) arranged to extend away from said piston (14x)(14x') within an extension (16) to said valve body (3)(3') to have an outer end portion (23a) arranged to project through and beyond an outer end part (22) of said extension (20,23), said elongate member (20,23) being movable with or by said piston (14x)(14x') under pressure in the equalising chamber (9) and said elongate member outer end portion (23a) and its location relative to said outer end part (22) of said extension (16) being visable to an operator.

7.    A pressure equalising device (1) as claimed in claim 6 wherein said extension outer end part (22) is provided with a readily fitted and detachable transparent dust sealing cap (29) through which the location of the elongate member projecting end portion (23a) can be viewed.

8.    A pressure equalising device as claimed in claim 6 or claim 7 wherein said elongate member (20,23) is disposed co-axially with the valve member (14)(14') and has an inner end portion (20a) slidably located in and through a co-axial junction bore between the piston part bore (18) and said extension (16) for engagement with an outer side of the piston part (14x)(14x'), said elongate member (20,23) being biassed inwardly by means of a compression spring (19) within the extension (16) and bearing on an abutment (20b) of the elongate member (20, 23) adjacent said inner end portion thereof remote from the piston part bore (18) and within said extension (16).

FIG.1

13

1

12

2

II

II

3

15a
8
10
10a
11
3
27
IV
III
III
3a
4
28a
IV

FIG.2

8

5

7

8
15a
3
15
4
6
3a
4
4a

FIG.4

0142300

FIG. 3

FIG. 5

FIG. 6

FIG. 7

0142300

## FIG. 8